# FASCICULE DE BREVET EUROPEEN

(11) **EP 3 395 606 B1**
(45) Date de publication et mention de la délivrance du brevet: **17.03.2021**
(21) Numéro de dépôt: 18168882.1
(22) Date de dépôt: 24.04.2018
(51) Int. Cl.: B60L 53/14

(54) **SUPPORT DE PISTES CONDUCTRICES EN ÉLASTOMÈRE À SECTION RECTANGULAIRE POUR SYSTÈME D'ALIMENTATION ÉLECTRIQUE PAR LE SOL**
HALTERUNG FÜR LEITERBAHNEN AUS ELASTOMER MIT RECHTECKIGEM QUERSCHNITT FÜR STROMVERSORGUNGSSYSTEM ÜBER DEN BODEN
CONDUCTIVE TRACKS ELASTOMERIC CARRIER WITH RECTANGULAR SECTION FOR GROUND ELECTRIC FEEDING SYSTEM

(30) Priorité: 25.04.2017 FR 1753583
(43) Date de publication de la demande: 31.10.2018
(73) Titulaire: ALSTOM Transport Technologies, 93400 Saint-Ouen (FR)
(72) Inventeur: DUPRAT, Patrick, 93340 LE RAINCY (FR)
(74) Mandataire: Lavoix

(56) Documents cités:
- EP-A1- 1 043 186
- WO-A2-2010/098547
- WO-A2-2010/117139
- FR-A1- 3 019 113
- US-A1- 2013 037 367
- US-B1- 6 471 020

## Description

La présente invention concerne un segment de rail d'un système d'alimentation électrique par le sol pour un véhicule terrestre. Le segment de rail comprends un support de pistes conductrices de courant électrique d'un système d'alimentation électrique par le sol pour un véhicule terrestre, notamment un véhicule automobile, sous forme d'une bande en un matériau élastomère isolant électrique, comprenant une surface d'alimentation électrique du véhicule terrestre sensiblement plane, munie de gorges longitudinales, chaque gorge étant destinée à recevoir une piste conductrice, et une surface de solidarisation à une chaussée de route, à l'opposé de la surface d'alimentation électrique.

Un support 36 est connu du document FR 3 017 342 A1. L'inconvénient de ce support 36 est son intégration complexe dans la chaussée 12 d'une route. En effet, de par la forme en « V » de sa surface inférieure 52, ce support nécessite un socle en béton 22 avec une surface supérieure de forme en « V » complémentaire comme interface de solidarisation à la chaussée.

Le document FR 3 019 113 A1 décrit un autre système d'alimentation par le sol avec des supports 25, 26 de pistes conductrices 11, 12 sous forme de profilés. Ce document prévoit également un scellage en béton 7.

Le document US 383,274 décrit des bandes élastiques en caoutchouc u, u' portant des segments conducteurs t. Toutefois, cette solution connue est prévue pour l'intégration dans des traverses A de voie ferrée et n'est pas adaptée à l'intégration dans une chaussée.

Le document US 6 471 020 décrit un système de transfert routier qui fonctionne en conjonction avec tout véhicule électrique équipé de composants pour acquérir de l'énergie du réseau routier. Le système de transfert de puissance de la route est alimenté en électricité.

Le document WO 2010/098547 décrit un dispositif d'alimentation électrique et un dispositif d'acquisition de puissance pour un véhicule électrique entraîné par induction électromagnétique. Ces dispositifs permettent d'augmenter un rendement de transfert d'énergie en optimisant une tolérance de déviation latérale et en réduisant au minimum un écart entre le dispositif d'acquisition d'énergie et le dispositif d'alimentation électrique, tout en évitant que le dispositif d'acquisition d'énergie ne heurte un obstacle présent sur une route et ne soit endommagé par la collision.

Un but de l'invention est donc de réaliser un segment de rail amélioré.

Selon l'invention, ce but est atteint avec le segment de rail tel que défini dans la revendication 1.

En prévoyant une section transversale rectangulaire du support, celui-ci peut être placé et figé directement dans une tranchée à section transversale rectangulaire complémentaire de la chaussée. Une telle tranchée se réalise facilement par fraisage de la chaussée avec une fraiseuse. Puisque la surface d'alimentation électrique et la surface de solidarisation forment les côtés longs dudit rectangle, le support est d'une faible épaisseur. Ainsi, le fraisage de la chaussée peut être limité à une faible profondeur, ce qui simplifie le fraisage.

Des modes de réalisation préférés de la présente invention sont décrits dans les revendications dépendantes.

L'invention a aussi trait à une chaussée de route avec un rail d'un système d'alimentation électrique par le sol pour un véhicule terrestre, notamment un véhicule automobile, le rail étant composé d'une série de segments de rail tels que définis ci-dessus juxtaposés les uns derrière les autres selon une direction longitudinale, le rail étant inséré dans une tranchée ménagée dans la chaussée et étant fixé dans la tranchée de préférence par un joint bitumineux.

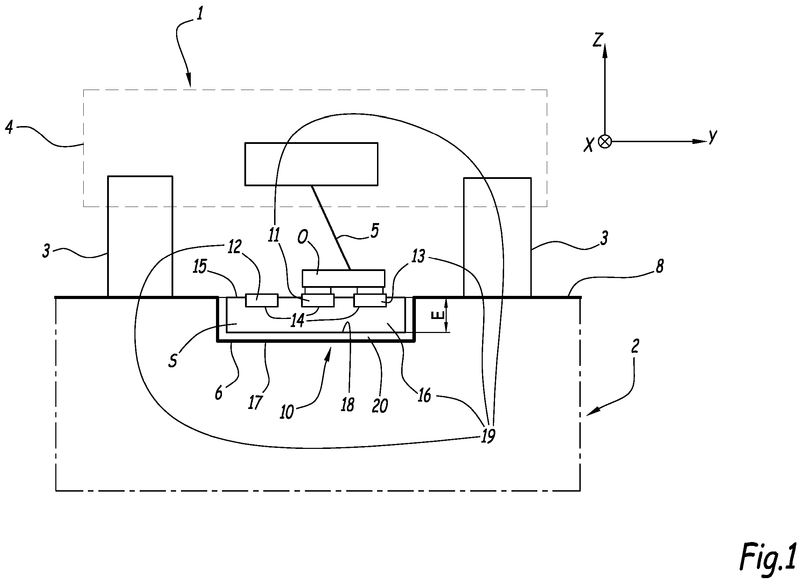

L'invention sera mieux comprise à la lecture de la description suivante donnée uniquement à titre illustratif, en référence à l'unique figure qui représente une coupe transversale d'une chaussée de route selon l'invention.

Fort de son expérience dans le domaine des systèmes d'alimentation par le sol connus sous l'acronyme de systèmes APS, du type par conduction, pour des véhicules électriques guidés, c'est-à-dire contraints à se déplacer le long de voies, (en particulier de tramways se déplaçant le long de voies ferrées), la demanderesse a développé le présent système d'alimentation par le sol pour des véhicules électriques non guidés.

Sur la figure est représentée une voiture 1, en tant que véhicule électrique non guidé, circulant sur une chaussée 2.

Un trièdre XYZ est classiquement associé à la voiture 1 : l'axe X selon la direction longitudinale, orienté vers l'avant ; l'axe Y selon la direction transversale, orienté de gauche à droite ; et l'axe Z selon la direction verticale, orienté de bas en haut.

La voiture 1 comporte une caisse 4 et des roues 3, dont certaines directrices. La voiture 1 comporte des moyens de direction (non représentés) permettant à un conducteur de modifier l'angle des roues directrices dans le plan XY de manière à diriger le véhicule 1.

La voiture 1 comporte une batterie rechargeable et un moteur électrique (non représentés).

La voiture 1 est équipée d'un moyen de captation permettant de collecter une puissance électrique au cours du déplacement de la voiture 1. Les moyens de captation sont référencés de manière générale par le chiffre 5.

Le moyen de captation 5 comporte un patin 0 propre à être mis en contact glissant sur une paire de pistes d'alimentation du système d'alimentation par le sol, qui va maintenant être décrit.

La chaussée 2 comporte une tranchée 6 à l'intérieur de laquelle est positionné le système d'alimentation par le sol, référencé de manière générale par le chiffre 10.

Une fois le système 10 mis en position dans la tranchée 6, la surface supérieure 8 de la chaussée 2 est continue sur toute la largeur de celle-ci. La surface supérieure 8 est sensiblement plane.

En position, le système 10 présente, affleurant à la surface 8 de la chaussée 2 :
- une piste conductrice de phase 11, destinée à être connectée électriquement à une source de puissance électrique, délivrant par exemple un potentiel Vₛ de +750 V DC ;
- une piste conductrice de neutre 12, destinée à être connectée électriquement à un potentiel de référence V_{ref}, par exemple de 0 V ;
- une piste conductrice de retour de courant 13.

La piste de phase 11 présente une largeur de 5 cm environ et une longueur de plusieurs mètres. La longueur exacte dépend du type d'application.

Avantageusement, les pistes de neutre 12 et de retour de courant 13 sont réalisées de façon identique à la piste de phase 11.

Les pistes de neutre 12 et de retour de courant 13 circulent parallèlement à la piste de phase 11, sur chaque côté de celle-ci. Les bords latéraux de la piste de phase 11 et les bords latéraux de la piste de neutre 12 et de la piste de retour de courant 13, qui sont en regard l'un de l'autre, sont espacés d'une distance de 12 à 15 cm.

Selon l'invention, lesdites pistes 11, 12 et 13 sont insérées dans des gorges longitudinales 14 pratiquées dans une surface d'alimentation électrique 15 d'un support de pistes conductrices 16. Les gorges 14 sont situées les unes à côté des autres et s'étendent parallèlement les unes par rapport aux autres.

Le support 16 a une section transversale S rectangulaire. Il est moulé d'une pièce et constitué d'un matériau élastomère isolant électrique. De préférence, le matériau est un caoutchouc, tel que l'éthylène-propylène-diène monomère connu sous l'acronyme EPDM.

Le support 16 se présente sous la forme d'une bande parallélépipédique. Avantageusement, cette bande à une longueur d'environ 3 m et une largeur entre 40 et 50 cm.

Le support 16 est solidarisé au fond 17 de la tranchée 6 par sa surface inférieure de solidarisation 18. La surface de solidarisation 18 est à l'opposé de la surface d'alimentation 15.

On notera que les surfaces d'alimentation 15 et de solidarisation 18 forment les côtés longs du rectangle formant la section transversale S. Ainsi, le support 16 a une faible épaisseur E, de préférence d'environ 8 cm.

De préférence, le support 16 comprend un dispositif de drainage d'eau. Ce dispositif permet notamment d'évacuer l'eau de pluie pour éviter des fuites de courant de la piste conductrice 11 vers les pistes 12 ou 13.

Le support 16 et le pistes conductrices 11, 12 et 13 forment ensemble un segment de rail 19. Le segment de rail 19 peut comprendre une antenne radio de réception et/ou d'émission permettant une communication radio avec la voiture 1. Un système de chauffage, par exemple, électrique, peut également être intégré dans le segment de rail 19. Un tel chauffage empêche la formation de gel en hiver.

Une série de segments de rail 19 peuvent être juxtaposés les uns derrière les autres selon la direction longitudinale X dans la tranchée 6 afin de former un rail d'alimentation.

Les segments de rail 19, et donc le rail complet, sont figés dans la tranchée 6 à l'aide d'une colle, par exemple un joint bitumineux 20. La colle 20 est disposée sur les parois de la tranchée 6.

L'implantation d'un rail selon l'invention dans une chaussée 2 est très aisée. Il suffit d'usiner l'asphalte de la chaussée, par exemple par fraisage, pour créer la tranchée 6. Une fois la tranchée réalisée, on pose le joint bitumineux sur les parois de la tranchée 6. Puis, on insère les supports 16 les uns derrière les autres dans la tranchée 2. Les supports 16 sont fixés en position par la colle bitumineuse. Finalement, on insère les pistes conductrices 11, 12 et 13 dans les gorges 14 et on les y fixe par exemple à l'aide de vis.

La présente invention a notamment les avantages suivants :
- Un seul support 16 continu intégrant les trois pistes de phase, de retour de courant et de neutre ;
- La forme parallélépipédique du support 16 est particulièrement adaptée à l'intégration dans une route en asphalte ;
- On évite la formation de fissures dans la route, notamment grâce aux matériaux utilisés.

## Revendications

1. Segment de rail (19) d'un système d'alimentation électrique par le sol pour un véhicule terrestre (1), notamment un véhicule automobile, le segment de rail comportant :
- un support (16) de plusieurs pistes conductrices de courant électrique (11, 12, 13)comprenant :
- une surface d'alimentation électrique du véhicule terrestre (15) sensiblement plane, munie de trois gorges longitudinales (14), chaque gorge étant destinée à recevoir une piste conductrice (11, 12, 13), et
- une surface de solidarisation à une chaussée de route (18), à l'opposé de la surface d'alimentation électrique (15),
où ledit support (16) a une section transversale (S) en forme de rectangle et la surface d'alimentation électrique (15) et la surface de solidarisation (18) forment les côtés longs dudit rectangle ; et
le segment de rail (19) ayant une piste conductrice de phase (11) dans la première gorge, une piste conductrice de retour de courant (13) dans la deuxième gorge et une piste conductrice de neutre (12)
le segment de rail étant **caractérisé en ce que** :
- le support (16) est sous forme d'une bande en un matériau élastomère isolant électrique;
- le support (16) comprend une piste conductrice (11, 12, 13) dans chaque gorge (14) de la surface d'alimentation électrique (15), chaque piste conductrice étant fixée mécaniquement dans sa gorge, notamment par vissage,
- la piste conductrice de neutre (12) est placé dans la troisième gorge, la piste conductrice de phase étant de préférence agencée entre les deux autres pistes.

2. Segment de rail (19) selon la revendication 1, dans lequel lesdites gorges sont situées les unes à côté des autres et s'étendant parallèlement les unes par rapport aux autres.

3. Segment de rail (19) selon l'une quelconque des revendications précédentes, le support (16) étant d'une seule pièce moulée.

4. Segment de rail (19) selon l'une quelconque des revendications précédentes, le support (16) étant réalisé en caoutchouc, tel que de l'éthylène-propylène-diène monomère connu sous l'acronyme EPDM.

5. Segment de rail (19) selon l'une quelconque des revendications précédentes, comprenant en outre un dispositif de drainage d'eau.

6. Segment de rail (19) selon la revendication 1, comprenant en outre une antenne radio et/ou un système de chauffage.

7. Chaussée de route (2) avec un rail d'un système d'alimentation électrique par le sol pour un véhicule terrestre, notamment un véhicule automobile, le rail étant composé d'une série de segments de rail (19) selon l'une quelconque des revendications précédentes juxtaposés les uns derrière les autres selon une direction longitudinale, le rail étant inséré dans une tranchée (6) ménagée dans la chaussée (2) et étant fixé dans la tranchée de préférence par un joint bitumineux (20).

## Patentansprüche

1. Schienensegment (19) für ein System zur elektrischen Versorgung mittels des Bodens für ein Landfahrzeug (1), insbesondere ein Kraftfahrzeug, wobei das Schienensegment aufweist:
- einen Träger (16) für mehrere Leiterbahnen für elektrischen Strom (11, 12, 13), welcher aufweist:
- eine im Wesentlichen ebene Fläche zur elektrischen Versorgung des Landfahrzeugs (15), welche mit drei Längsnuten (14) bereitgestellt ist, wobei jede Nut dazu bestimmt ist, eine Leiterbahn (11, 12, 13) aufzunehmen, und
- eine Fläche zum Verbinden mit einem Straßenbelag (18), welche entgegengesetzt zur Fläche zur elektrischen Versorgung (15) ist,
wobei der Träger (16) einen Querschnitt (S) in Rechteck-Form hat und die Fläche zur elektrischen Versorgung (15) und die Fläche zum Verbinden (18) die Längsseiten des besagten Rechtecks bilden, und
wobei das Schienensegment (19) eine Phase-Leiterbahn (11) in der ersten Nut, eine Rückstrom-Leiterbahn (13) in der zweiten Nut und eine Neutral-Leiterbahn (12) hat,
wobei das Schienensegment **dadurch gekennzeichnet ist, dass**:
- der Träger (16) die Form eines Streifens aus einem elektrisch isolierenden Elastomermaterial hat,
- der Träger (16) eine Leiterbahn (11, 12, 13) in jeder Nut (14) der Fläche zur elektrischen Versorgung (15) aufweist, wobei jede Leiterbahn mechanisch in ihrer Nut befestigt ist, insbesondere mittels Schraubens,
- die Neutral-Leiterbahn (12) in der dritten Nut angeordnet ist, wobei die Phase-Leiterbahn vorzugsweise zwischen den beiden anderen Bahnen angeordnet ist.

2. Schienensegment (19) gemäß Anspruch 1, wobei die besagten Nuten nebeneinander angeordnet sind und sich parallel bezüglich einander erstrecken.

3. Schienensegment (19) gemäß irgendeinem der vorherigen Ansprüche, wobei der Träger (16) aus einem einzigen geformten Teil ist.

4. Schienensegment (19) gemäß irgendeinem der vorherigen Ansprüche, wobei der Träger (16) aus Gummi hergestellt ist, wie zum Beispiel aus Ethylen-Propylen-Dien-Monomer, welches unter dem Akronym EPDM bekannt ist.

5. Schienensegment (19) gemäß irgendeinem der vorherigen Ansprüche, welches ferner eine Vorrichtung zum Abfluss von Wasser aufweist.

6. Schienensegment (19) gemäß Anspruch 1, welches ferner eine Funkantenne und/oder ein Heizsystem aufweist.

7. Straßenbelag (2) mit einer Schiene eines Systems zur elektrischen Versorgung mittels des Bodens für ein Landfahrzeug, insbesondere ein Kraftfahrzeug, wobei die Schiene gebildet ist aus eine Serie von Schienensegmenten (19) gemäß irgendeinem der vorherigen Ansprüche, welche hintereinander entlang einer Längsrichtung aneinandergereiht sind, wobei die Schiene in einen Graben (6) eingeführt ist, welcher in dem Belag (2) bereitgestellt ist, und in dem Graben vorzugsweise mittels einer Bitumen-Fuge (20) befestigt ist.

## Claims

1. A rail segment (19) of a ground electric feeding system for a land vehicle (1), in particular a motor vehicle, the rail segment comprising:
- a carrier for one or several electrically conductive tracks (11, 12, 13) comprising;
- a substantially planar electric feeding surface of the land vehicle (15), provided with three longitudinal grooves (14), each groove being intended to receive a conductive track (11, 12, 13), and
- a surface for securing to a roadway (18), opposite the electric feeding surface (15), wherein said carrier (16) has a rectangular cross-section (S) and the electric feeding surface (15) and the securing surface (18) form the long sides of said rectangle, and
the rail segment (19) having a phase conductive track (11) in the first groove, a reverse current conductive track (13) in the second groove and a neutral conductive track (12), the rail segment being **characterized in that**:
- the carrier (16) is in the form of a strip of electrically insulating elastomeric material;
- the carrier (16) comprises a conductive track (11, 12, 13) in each groove (14) of the electric feeding surface (15), each conductive track being mechanically fixed in its groove, in particular by screwing;
- the neutral conductive track (12) is placed in the third groove, the phase conductive track preferably being arranged between the other two tracks.

2. The rail segment (19) according to claim 1, wherein said grooves are situated next to one another and extending parallel to one another.

3. The rail segment (19) according to any one of the preceding claims, the carrier (16) being a single molded piece.

4. The rail segment (19) according to any one of the preceding claims, the carrier (16) being made from rubber, such as the ethylene-propylene-diene monomer known under the acronym EPDM.

5. The rail segment (19) according to any one of the preceding claims, further comprising a water draining device.

6. The rail segment (19) according to claim 1, further comprising a radio antenna and/or a heating system.

7. A roadway (2) with a ground electric feeding system for a land vehicle, in particular a motor vehicle, the rail being made up of a series of rail segments (19) according to any one of the preceding claims juxtaposed behind one another in a longitudinal direction, the rail being inserted in a trench (6) arranged in the roadway (2) and being fixed in the trench preferably by a bituminous joint (20).
